# EUROPÄISCHE PATENTSCHRIFT

(11) **EP 0 520 483 B1**
(45) Veröffentlichungstag und Bekanntmachung des Hinweises auf die Patenterteilung: **04.01.1995**
(21) Anmeldenummer: 92110798.3
(22) Anmeldetag: 26.06.1992
(51) Int. Cl.: H04Q 3/62, H04M 3/50, H04M 15/34, H04M 7/14, H04M 3/48

(54) **Verfahren und Anlage zur Herstellung von Fernmeldeverbindungen**
Method and arrangement for establishing telephone connections
Procédé et arrangement pour réaliser des connexions téléphoniques

(30) Priorität: 28.06.1991 EP 91110802
(43) Veröffentlichungstag der Anmeldung: 30.12.1992
(73) Patentinhaber: SIEMENS AKTIENGESELLSCHAFT, 80333 München (DE)
(72) Erfinder: Wille, Klaus, Dipl. Ing., W-8000 München 80 (DE); Jahnke, Georg, Dipl. Ing., W-8000 München 83 (DE); Wildgrube, Eberhard, Dipl. Phys., W-8000 München 90 (DE); Myo-Kyaw, Maung, W-8035 Stockdorf (DE)

(56) Entgegenhaltungen:
- EP-A- 0 036 619
- US-A- 3 867 582
- US-A- 4 086 438
- US-A- 4 969 185
- PATENT ABSTRACTS OF JAPAN vol. 11, no. 20 (E-472)(2467) 20. Januar 1987 & JP-A-61 189 759

## Beschreibung

Die Erfindung betrifft ein Verfahren nach dem Oberbegriff des Patentanspruchs 1 oder 10, sowie eine Anlage zur Durchführung des Verfahrens nach dem Oberbegriff des Patentanspruchs 13 oder 14.

Aus dem US-Patent 4,652,700 ist bereits ein Kommunikationssystem mit zentralisierten Speichereinrichtungen bekannt. In diese Speichereinrichtungen sind Sprachnachrichten hinterlegbar, die von dem Kommunikationssystem gezielt an vorgegebene empfangsseitige Endgeräte übermittelt werden. Aus einer von der Fa. VMX, Inc./USA herausgegebenen Druckschrift "VMX User's Guide" ist bereits ein als "Future Delivery" benanntes Leistungsmerkmal bekannt. Es besteht darin, daß ein A-Fernsprechteilnehmer in einem Kommunikationssystem eine Nachricht für einen B-Teilnehmer hinterlegen kann, die zu einem späteren Zeitpunkt dem B-Teilnehmer zugesprochen wird (Seite 19 der Druckschrift). Diese Übermittlung kann jedoch, insbesondere wenn sie über das öffentliche Netz zu weit entfernten externen Endgeräten erfolgt, zu erheblichen Kosten führen, die der Betreiber des Kommunikationssystems zu tragen hat.

Aus der deutschen Offenlegungsschrift DE 33 30 376 Al und der europäischen Patentanmeldung 0 380 190 sind bereits ein Verfahren zur Abspeicherung der bei der Gebührenerfassung in Fernsprechanlagen, insbesondere Fernsprechnebenstellenanlagen anfallenden Gesprächsdaten sowie ein mit "Automatic generation of billing records" bezeichnetes Verfahren bekannt. Die bekannten Verfahren dienen dazu, die Gebühren von Fernsprechverbindungen zu erfassen, die von Benutzern der jeweiligen Fernsprechanlage eingeleitet werden.

Aus der US-PS 3,867,582 ist bereits eine als "Remote Control For Private Automatic Branch Telephone Exchange" benannte Anordnung für Nebenstellenanlagen bekannt. Durch Wahl einer bestimmten Ziffernfolge können externe Endgeräte die Dienste der Nebenstellenanlage wie interne Endgeräte in Anspruch nehmen.

Damit lassen sich für die externen Endgeräte Kosten vermeiden, die im Zusammenhang mit Verbindungen entstehen würden, die sonst unter Zwischenschaltung einer Vermittlungsstelle (Operator) bzw. unter Verwendung von Kreditkarten durchgeführt würden.

Aus der europäischen Patentanmeldung EP-A-0 036 619 ist bereits eine Schaltungsanordung für eine Fernsprechanlage, insbesondere Fernsprechnebenstellenanlage mit einem Rückrufnachrichtenspeicher bekannt. Die vorbekannte Schaltungsanordnung ist in der Weise ausgestaltet, daß in Abhängigkeit des Schaltzustandes gerufene Teilnehmerendstelle belegt bzw. Nichtmelden der gerufenen Teilnehmerendstelle innerhalb einer bestimmten Zeit ein von einer vergeblich anrufenden Teilnehmerstelle belegter Verbindungssatz mit einem besonderen Rückrufnachrichtenspeicher verbunden wird. Diesem Rückrufnachrichtenspeicher ist ein Nachrichtensendespeicher zugeordnet. In den Rückrufnachrichtenspeicher sind von dem vergeblich Anrufenden nach entsprechender sprachlicher Aufforderung Informationen Durchwahl bzw. Durchsprache eingebbar, die für den Aufbau einer Rückrufverbindung erforderlich sind. Durch eine Schaltzustandsänderung an der vergeblich angerufenen Teilnehmerendstelle wird diese mit dem Rückrufnachrichtenspeicher zur Ubermittlung der Informationen für den Rückruf verbunden.

Aus der US-PS 3,728,486 ist bereits ein als "Voicegram Service" benannter Dienst bekannt. Eine Zentrale (Voicegram Service Center) veranlaßt die Aufzeichnung von Sprachnachrichten einer sendeseitigen Station, übermittelt die Sprachnachrichten einer empfangsseitigen Station zu einer vorgebbaren Zeit und stellt die Gebühren für die Inanspruchnahme des Dienstes der sendeseitigen Station in Rechnung.

Der Erfindung liegt die Aufgabe zugrunde, ein Verfahren der eingangs genannten Art, das Benutzern externer Fernmeldeendgeräte (z.B. Fernsprechendgeräte, Faxgeräte) die Möglichkeit bietet, Fernmeldenebenstellenanlagen in einem erweiterten Umfang zu benutzen, sowie eine Anlage zur Durchführung des Verfahrens anzugeben.

Die Lösung dieser Aufgabe erfolgt erfindungsgemäß durch ein Verfahren mit den Merkmalen eines der Patentansprüche 1 oder 10, sowie durch eine Anlage mit den Merkmalen eines der Patentansprüche 13 oder 14.

Als wesentlich für die Erfindung ist anzusehen, daß Benutzer externer Fernmeldeendgeräte Fernmeldenebenstellenanlagen gezielt als Relaisstationen benutzen können, wobei aber auch Verbindungen zwischen einem internen Fernmeldeendgerät und dem ursprünglich rufenden Fernmeldeendgerät herstellbar sind. Die in diesem Zusammenhang entstehenden Kosten werden benutzerindividuell erfaßt und dem ursprünglich rufenden externen Fernmeldeendgerät zugeordnet. Für den Betreiber derartiger Fernmeldenebenstellenanlagen ergibt sich damit der Vorteil, daß den jeweiligen Benutzern die angefallenen Kosten in einfacher Weise in Rechnung gestellt werden können.

Das Verfahren gemäß der Erfindung ermöglicht auch die Verbindung zwischen einem ersten Fernmeldeendgerät, das bezüglich einer Fernmeldenebenstellenanlage ein externes Gerät ist, und allen Endgeräten, zu denen diese Fernmeldenebenstellenanlage eine Verbindung herzustellen vermag. Damit werden praktisch weltweite Verbindungen zwischen dem ersten Fernmeldeendgerät als A-Teilnehmer und korrespondierenden Endgeräten als B-Teilnehmern ermöglicht. Dabei kann vorgesehen sein, daß der A-Teilnehmer im Rahmen einer ersten Fernmeldeverbindung die Rufnummer des gewünschten B-Teilnehmers übermittelt. Nach Beendigung der ersten Fernmeldeverbindung wird geprüft, ob sich der B-Teilnehmer meldet und im Anschluß daran wird im Rahmen einer zweiten Fernmeldeverbindung der B- und der A-Teilnehmer miteinander verbunden. Dieses Verfahren zeichnet sich durch den Vorteil geringer Kosten aus, wenn davon auszugehen ist, daß die Gebühren zwischen der Zielnebenstellenanlage und dem B-Teilnehmer geringer sind als die Gebühren zwischen der Zielnebenstellenanlage und dem A-Teilnehmer, dies im Vergleich zu einem Verfahren, bei dem im Rahmen der zweiten Fernmeldeverbindung zunächst der A-Teilnehmer und im Anschluß daran der B-Teilnehmer gerufen wird. Dieses letztgenannte Verfahren, bei dem der A-Teilnehmer erst im Rahmen der zweiten Fernmeldeverbindung (Rückruf von der Zielnebenstellenanlage zum A-Teilnehmer) die Rufnummerndaten des gewünschten B-Teilnehmers übermittelt, hat jedoch den Vorteil, daß der A-Teilnehmer unmittelbar nach der Herstellung der Rückrufverbindung mit dem ursprünglich gewünschten B-Teilnehmer verbunden wird, bzw. daß der A-Teilnehmer, sofern sich der ursprünglich gewünschte B-Teilnehmer nicht meldet, die Rufnummerndaten eines weiteren gewünschten B-Teilnehmers an die Zielnebenstellenanlage übermitteln kann. In diesem Zusammenhang kann der A-Teilnehmer im Rahmen einer über die Fernmeldenebenstellenanlage laufenden Verbindung, wenn der B-Teilnehmer aus der Verbindung ausscheidet, der Anlage auch die Rufnummer eines weiteren B-Teilnehmers übermitteln, zu dem dann die Verbindung aufgebaut wird. Hierdurch wird der A-Teilnehmer davon entlastet, eine weitere erste Verbindung zu der Nebenstellenanlage herzustellen, die ihrerseits davon entlastet wird, die zweite Verbindung wiederholt zu dem A-Teilnehmer herzustellen.

Um mißbräuchliche Inanspruchnahmen zweiter Fernmeldeverbindungen auszuschließen, kann vorgesehen sein, daß die ersten Fernmeldeendgeräte im Rahmen der ersten Fernmeldeverbindungen benutzer- und/oder fernmeldeendgeräteindividuelle Berechtigungsinformationen an die Fernmeldenebenstellenanlage übermitteln. Sofern das erste Fernmeldeendgerät ein ISDN-Endgerät ist und bei abgehenden Verbindungen die eigene Rufnummer selbsttätig übermittelt wird und sofern weiterhin die entsprechende Fernmeldenebenstellenanlage eine ISDN-Anlage ist, erübrigt sich für den Benutzer des ersten Fernmeldeendgerätes, eine fernmeldeendgeräteindividuelle Berechtigungsinformation einzugeben. Die Fernmeldenebenstellenanlage kann dann die Berechtigung zur Inanspruchnahme des Dienstes anhand der übermittelten Endgeräterufnummer überprüfen.

Vorteilhafterweise ist weiterhin vorgesehen, daß die Fernmeldenebenstellenanlage Verbindungsherstellungsversuche zu dem zweiten Fernmeldeendgerät zu einem von dem ersten Fernmeldeendgerät bestimmten Zeitpunkt vornimmt. Auch kann für den Fall eines erfolglosen Verbindungsherstellungsversuches vorgesehen sein, daß die Fernmeldenebenstellenanlage ausgelöst durch eine entsprechende, vom ersten Fernmeldeendgerät übermittelte Zusatzinformation mehrere Verbindungsherstellungsversuche unternimmt. Dieser Vorteil ist insbesondere dann ausgeprägt, wenn zum Zeitpunkt des ersten Verbindungsherstellungsversuches mindestens eines der beiden zu verbindenden Fernmeldeendgeräte nicht verbindungsbereit ist.

Das Verfahren gemäß der Erfindung ermöglicht es auch, eine von dem ersten Fernmeldeendgerät abgegebene Fernmeldenachricht einem zweiten Fernmeldeendgerät zu übermitteln, ohne daß das erste Fernmeldeendgerät in die zweite Fernmeldeverbindung eingebunden ist.

Die bei der Herstellung der zweiten Verbindung für die Benutzung des öffentlichen Fernmeldenetzes anfallenden Gebühren werden in einem dem ersten Endgerät zugeordneten Speicher der Fernmeldenebenstellenanlage abgespeichert. Dabei kann vorgesehen sein, daß die Fernmeldenebenstellenanlage beispielsweise nach Abschluß einer zweiten Fernmeldeverbindung oder bei Erreichen eines vorgebbaren Gebührenwertes die abgespeicherten Gebühreninformationen aus dem entsprechenden Speicher abruft und einer dem ersten Fernmeldeendgerät zugeordneten externen Einrichtung übermittelt. Damit wird die Abrechnung von Gebühren für zweite Fernmeldeverbindungen, die die Fernmeldenebenstellenanlage ausgelöst durch einen vom ersten Endgerät initiierte Fernmeldeverbindung durchgeführt hat, zwischen dem Betreiber der Fernmeldenebenstellenanlage und dem Betreiber des ersten Fernmeldeendgeräts erleichtert.

Die Erfindung wird nun anhand der Figuren beschrieben.

Es zeigen:
- Fig. 1: eine Fernmeldenebenstellenanlage zur Durchführung des erfindungsgemäßen Verfahrens,
- Fig. 2: ein an die Fernmeldenebenstellenanlage nach Fig. 1 anschaltbares Modul, das in die Durchführung des erfindungsgemäßen Verfahrens eingebunden ist,
- Fig. 3: eine Anordnung zweier Fernmeldenebenstellenanlagen nach Fig. 1, welche sowohl über das öffentliche Fernmeldenetz als auch über ein separates öffentliches oder privates Datennetz miteinander verbunden sind,
- Fig. 4: ein Flußdiagramm einer ersten Ausführungsform des erfindungsgemäßen Verfahrens und
- Fig. 5: ein Flußdiagramm einer zweiten Ausführungsform des erfindungsgemäßen Verfahrens.

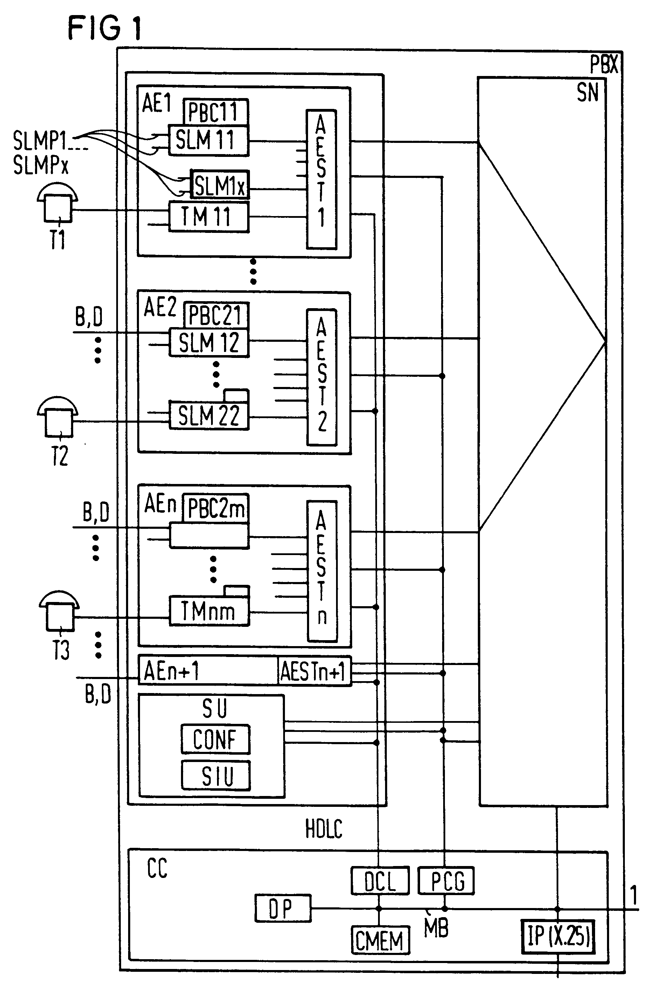

Die in Fig. 1 schematisch dargestellte Fernmeldenebenstellenanlage ist insbesondere eine ISDN-fähige Fernsprechnebenstellenanlage, die in ihrer Grundstruktur wie das in den Produktschriften der Firma Siemens "HICOM 600 System Product Data", Bestell-Nr. A19100-K3161-G430-01-7600 (Seite 35), "ISDN in the Office", Special Issue of telcom Report and Magazine COM, Seiten 56 bis 64, ISBN 3-8009-3849-9, sowie in den veröffentlichten europäischen Patentanmeldungen EP 0 306 693 A1 (US-PS 4,903,258), EP 0 303 870 A2 (US-PS 5,018,097) und EP 0 303 869 A1 (US-PS 5,047,923) beschriebene Kommunikationssystem ausgebildet sein kann. Dieses besteht aus einer Systemzentrale PBX mit einer Steuerung CC, das mit sogenannten Peripheriemodulen und einem Koppelnetz SN verbindbar ist. Die Peripheriemodule umfassen insbesondere Teilnehmeranschlußschaltungen SLM,SLM11... zur Verbindung mit internen Endgeräten sowie Leitungssatzschaltungen TM,TM11... zur Verbindung mit Endgeräten über das öffentliche Fernmeldenetz.

Die Teilnehmeranschlußschaltungen SLM,SLM11... sind teilnehmerorientierte Geräteanschlüsse, wie beispielsweise ISDN-Basisanschlüsse für digitale mono- und multifunktionale Endgeräte, 1-Kanal-Anschlußmodule für Endgeräte, wie digitale Sprachendgeräte und Vermittlungsendgeräte, sowie Teilnehmeranschlüsse für analoge Sprachendgeräte. Die in Fig. 1 dargestellten Endgeräte T1, T2, T3 können digitale oder analoge Sprachendgeräte sein. T1 ist ein externes Endgerät, T2 und T3 können interne oder externe Endgeräte sein. In Fig. 1 ist das mit einer Leitungssatzschaltung verbundene Endgerät T3 als externes Endgerät dargestellt. An die Teilnehmeranschlußschaltungen SLM11...SLM1x sind keine Endgeräte angeschlossen; sie bilden sogenannte Teilnehmeranschlußports SLMP1...SLMPx und dienen, wie noch beschrieben wird, als sogenannte Pseudo-Nebenstellen.

Die Leitungssatzschaltungen TM,TM11,... dienen zur Verbindung mit öffentlichen und/oder privaten Netzen bzw. Sondereinrichtungen und sind beispielsweise ISDN-Basisanschlüsse für ISDM-Amts- und -Querverkehr (zwei Kanäle zu 64 kBit/s und ISDN-Signalisierung) sowie digitale Schnittstelleneinheiten ('Digital Interface Unit'), d. h. Multiplexanschlüsse (30 Kanäle zu je 64 kBit/s) mit den Betriebsarten Amts- und Querverkehr mit ISDN-Signalisierung, Querverkehr mit kanalassoziierter Signalisierung.

Alle Peripheriemodule haben die gleichen systeminternen Schnittstellen, sie koppeln die einzelnen Basiskanäle B, auf denen Nutzdaten, d. h. Sprach- und/oder Dateninformationen, übertragen werden, an eine beliebige Auswahl aus über zwei Multiplexkanälen (Highways) mit beispielsweise 32 Kanälen des Koppelnetzes SN und übergeben die in einem Signalisierungskanal D übertragenen Signalisierungsinformationen als HDLG-Protokoll an die Steuerung CC.

Jedes Peripheriemodul weist eine Steuerung PBC11... auf, deren Aufgabe es ist, belegte Anschlußkanäle zu ausgewählten Kanälen der Multiplexkanäle gegebenenfalls im Zusammenwirken mit einer Steuerung AEST1... einer zugehörigen Anschlußeinheit AE1... zuzuordnen (europäische Patente 0 113 884 und 0 264 890, US-Patent 4,694,452).

Mehrere Peripheriemodule können funktionell zu einer Anschlußeinheit AE zusammengefaßt werden. Jede Anschlußeinheit AE1... AEn, AEn+1 ist einer Steuerung AEST1... zugeordnet und mit dem Koppelnetz SN über beispielsweise vier Sprach-, Daten- und Multiplexkanäle miteinander verbunden. Der Meldungsaustausch zwischen den Peripheriemodulen und der Steuerung CC erfolgt über einen Signalisierungskanal, der in Fig. 1 mit dem Bezugszeichen HDLC bezeichnet ist, im bekannten HDLC-Punkt-zu-Punkt-Mehrpunkt-Verfahren.

Mehreren Anschlußeinheiten AE1...AEn kann eine sogenannte Serviceeinheit SU zugeordnet sein. Diese umfaßt eine Signalisierungseinheit SIU und gegebenenfalls eine Konferenzeinrichtung CONF. Die Signalisierungseinheit SIU übernimmt die Zeichenversorgung des Systems mit Hörtönen und gegebenenfalls mit Ansagen; sie enthält unter anderem Tongeneratoren, die Wahlinformationen und Informationen zur Aktivierung von Leistungsmerkmalen nach einem vorgegebenen Mehrfrequenzverfahren bilden. Dabei werden die einzelnen Ziffern und Zeichen beispielsweise aus 2 von 8 Frequenzen gebildet. Ferner enthält die Einheit SIU Einrichtungen zum Empfang von MFV-Tastwahlzeichen und Amtswähltönen. Diese Funktionen werden in an sich bekannter Weise mit Signalprozessoren realisiert. Die Signalisierungseinheit SIU ist über zwei Sprach-, Daten-, Multiplexkanälen bei festen Funktionszuordnung mit dem Koppelnetz SN verbunden.

Das Koppelnetz SN ist vorzugsweise modular aufgebaut und besteht beispielsweise aus einer blockierungsfreien Zeitstufe für 16 Sprach-, Daten-, Multiplexkanäle. Durch Zusammenschalten zweier derartiger Grundmodule entsteht eine Koppelstufe für 1.024 Zeitlagen (32 Multiplexkanäle zu je 32 Kanälen). Die in dieser Weise gebildete blockierungsfreie Zeitstufe verbindet von den je 32 ankommenden und abgehenden Multiplexkanälen für Sprache oder Daten jeweils zwei beliebige der 32 Zeitlagen miteinander. Neben 1-Kanal-Verbindungen können auch Breitbandverbindungen hergestellt werden.

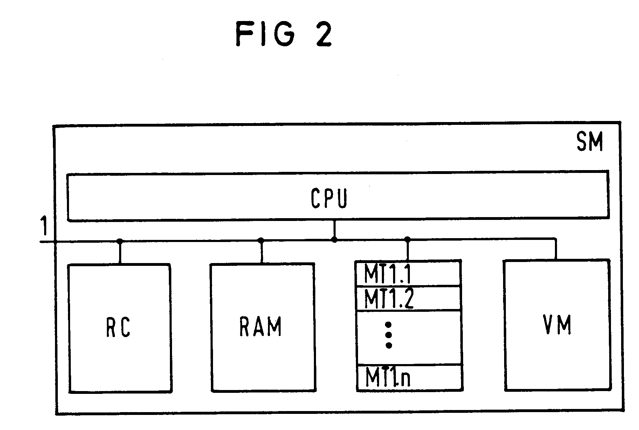

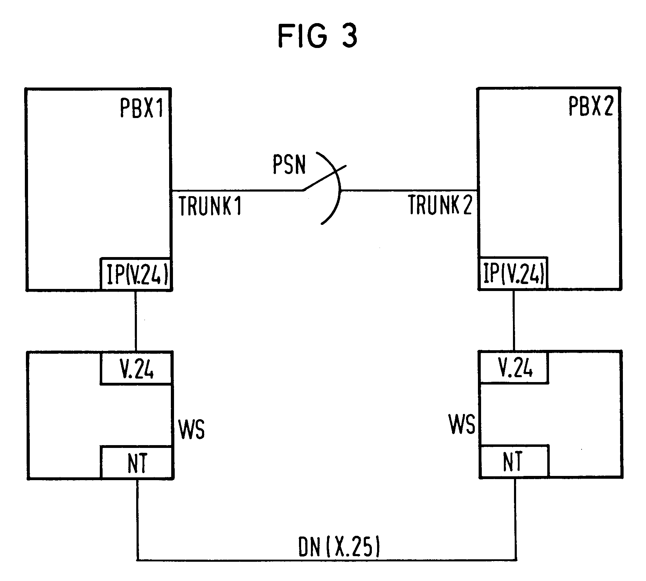

Das Steuerwerk CC übernimmt die entsprechend dem Peripherieaufbau anfallende vermittlungstechnische Verarbeitung. Es besteht aus einem Datenprozessor DP, einem Prozessor für Signalisierungssteuerung DCL, einem Taktgenerator PCG, einem Speicher CMEM und einem Schnittstellenprozessor IP, der mit einer in Fig. 1 nicht dargestellten betriebstechnischen Einheit verbunden ist. Der Schnittstellenprozessor IP kann zugleich eine V.24-Schnittstelle zu einer Workstation ("WS" in Fig. 3) bilden, über die Datenverbindungen zu einer weiteren Fernmeldenebenstellenanlage herstellbar sind. Der Speicher CMEM enthält Speicher, in denen endgeräte- und verbindungszustandsindividuelle Informationen abgespeichert werden, sowie eine nicht dargestellte Datenbasis mit Konfigurationsdaten. Insbesondere kann der Speicher CMEM auch die den ersten Fernmeldeendgeräten T1 zugeordneten Gebühreninformationen im Zusammenhang mit den zweiten Fernmeldeverbindungen aufnehmen. Alternativ sind - wie noch anhand von Fig. 2 beschrieben wird - separate, unterschiedlichen ersten Fernmeldeendgeräten T1.1, T1.2,...T1.n zugeordnete Gebühreninformationsspeicher MT1.1, MT1.2,... MT1.n in einem an die Fernmeldenebenstellenanlage ankoppelbaren Schaltungsmodul SM vorgesehen. Die genannten Komponenten DP, DCL, PCG, CMEM, IP sind über einen Multibus MB - wie in Fig. 1 dargestellt - miteinander verbunden.

Für den Datenprozessor DP werden vorzugsweise Prozessoren der Reihe SAB8086/80286 (Firma Siemens) verwendet. Der Speicher CMEM enthält hochintegrierte dynamische RAM-Bausteine und Fehlerkorrekturschaltungen. Der Datenprozessor DP kann, insbesondere im Zusammenwirken mit den Steuerungen AEST1... der Anschlußeinheiten AE, neben den üblichen vermittlungstechnischen Steuerungsprozeduren auch die Prozeduren im Zusammenhang mit dem erfindungsgemäßen Verfahren steuern. Alternativ ist, wie ebenfalls noch anhand von Fig. 2 beschrieben wird, eine separate Steuerung CPU vorgesehen, die mindestens einen Teil der Prozeduren im Zusammenhang mit dem erfindungsgemäßen Verfahren steuert.

Der Prozessor DCL für Signalisierungssteuerung dient dem Abwickeln des HDLC-Protokolls zu den Anschlußeinheiten AE1... AEn+1 und der Serviceeinheit SU.

Der Taktgenerator PCG führt die Taktversorgung der Fernmeldenebenstellenanlage durch.

Der Schnittstellenprozessor IP stellt die Verbindung zu integrierten Servern her. Hierzu können insbesondere sogenannte Sprachpost- oder Voicemail-Server gehören. Erfindungsgemäß ist ein Schaltungsmodul SM vorgesehen, das als integrierter Server ausgebildet sein kann. Das Schaltungsmodul SM (Fig. 2) weist eine separate Steuerung CPU auf, die über einen Bus mit einem Speicher RAM und Gebühreninformationsspeichern MT1.1, MT1.2, ...MT1.n verbunden ist. Der Speicher RAM enthält das der Steuerung CPU zugeordnete Programm. Die Steuerung CPU entlastet die Steuerung CC der Fernmeldenebenstellenanlage PBX und führt mindestens einen Teil der Prozeduren im Zusammenhang mit dem erfindungsgemäßen Verfahren durch. Hierzu gehören insbesondere die Prozeduren im Zusammenhang mit der Auswertung der von den ersten Fernmeldeendgeräten übermittelten Zusatzinformationen sowie die Prozeduren im Zusammenhang mit der Verwaltung der Gebühreninformationen. Zur Erkennung der von T1 gebildeten Zusatzinformationen greift die Steuerung auf an sich bekannte Prozessoren zu, die im Zusammenhang mit der Signalisierungseinheit SIU erwähnt wurden. Die Steuerung CPU überprüft anhand der von den ersten Fernmeldeendgeräten übermittelten Zusatzinformationen, ob diese bzw. deren Benutzer zu der Inanspruchnahme des Dienstes berechtigt sind. Die Steuerung CPU speichert die Rufnummern des zweiten Endgeräts, zu der die zweite Fernmeldeverbindung herzustellen ist, zwischen, beispielsweise in einem, einem speziellen ersten Fernmeldeendgerät T1 zugeordneten Bereich des Gebühreninformationsspeichers MT1.1. Die Steuerung CPU des Schaltungsmoduls SM teilt diese Rufnummerninformation (T2) gemeinsam mit einer Auftragsinformation zur Herstellung der zweiten Verbindung der Steuerung CC der Fernmeldenebenstellenanlage PBX mit.

Die Steuerung CPU verwaltet auch von ersten Fernmeldeendgeräten übermittelte Zusatzinformationen, die den Zeitpunkt und/oder die Anzahl der von der Fernmeldenebenstellenanlage PBX vorzunehmenden Verbindungsherstellungsversuche zu den jeweiligen zweiten Endgeräten betreffen.

Die ersten Fernmeldeendgeräte können im Rahmen der ersten Fernmeldeverbindung neben einer jeweiligen Zusatzinformation (im Zusammenhang mit der Berechtigung zur Inanspruchnahme des Dienstes, dem Zeitpunkt und/oder der Anzahl der Verbindungsherstellungsversuche zu zweiten Fernmeldeendgeräten) eine Fernmeldenachricht übermitteln, die im Rahmen der zweiten Fernmeldeverbindung einem durch die vom ersten Fernmeldeendgerät übermittelte Rufnummer bestimmten zweiten Fernmeldeendgerät zu übermitteln ist. Die Steuerung CPU speichert diese Fernmeldenachrichten in den Speicher VM, der ebenfalls im Schaltungsmodul SM vorgesehen sein kann, zwischen, ruft die Nachrichten aus dem Speicher VM ab und führt diese im Zuge von Versuchen der Fernmeldenebenstellenanlage, eine zweite Fernmeldeverbindung herzustellen, der Steuerung CC zu.

Die zweiten Fernmeldeverbindungen zu zweiten Fernmeldeendgeräten führen stets über das öffentliche Fernmeldenetz und verursachen Kosten, mit denen die Fernmeldenebenstellenanlage in Form von Gebühreninformationen belastet wird. Insbesondere erhält die Fernmeldenebenstellenanlage in an sich bekannter Weise verbindungsindividuelle Gebühreninformationen von dem entsprechenden öffentlichen Amt. Erfindungsgemäß kann vorgesehen sein, daß die Steuerung CC die im Zusammenhang mit dem erfindungsgemäßen Verfahren von Amtsleitungen aufgenommenen verbindungsindividuellen Gebühreninformationen der Steuerung CPU zuführt, die diese Informationen benutzer-bzw. fernmeldeendgeräteindividuell in die entsprechenden, ersten Fernmeldeendgeräten zugeordneten Gebühreninformationsspeicher MT1.1,MT1.2,... MT1.n einspeichert. Alternativ kann vorgesehen sein, daß die Fernmeldenebenstellenanlage bzw. das Schaltungsmodul SM die erforderlichen Gebühreninformationen anhand vorliegender Tarifinformationen und einer von einem Zeitglied RC (realtime clock) selbsttätig bildet.

Die Fernmeldenebenstellenanlage PBX kann, wie bereits beschrieben, Teilnehmeranschlußschaltungen SLM11...SLM1x aufweisen, an die keine Endgeräte angeschlossen sind. Diese Teilnehmeranschlußschaltungen weisen sogenannte Teilnehmeranschlußports SLMP1...SLMPx auf, denen jeweils eine (B-) Teilnehmerrufnummer zugeordnet ist. Das erfindungsgemäße Verfahren ist dann in der Weise ausgestaltet, daß der A-Teilnehmer (Endgerät T1) eine erste Fernmeldeverbindung zu einem ihm zugeordneten Teilnehmeranschlußport herstellt. Dem A-Teilnehmer wird der Freizustand des jeweiligen Teilnehmeranschlußports durch das Freizeichen signalisiert. Der A-Teilnehmer bzw. die Steuerung CC der Zielfernmeldenebenstellenanlage PBX beendet die erste Fernmeldeverbindung. Ausgelöst durch den Zugang des Anrufs bei dem Teilnehmeranschlußport greift die Steuerung auf eine nicht dargestellte Tabelle zu, in der die Zuordnung zwischen Teilnehmeranschlußport-Rufnummer und Rückrufnummer (Teilnehmerrufnummer des A-Teilnehmers) abgespeichert ist. Die Steuerung CC stellt im Anschluß daran die zweite Fernmeldeverbindung, d.h. die Rückrufverbindung zu dem A-Teilnehmer her. Die von dem A-Teilnehmer an die Zielfernmeldenebenstellenanlage PBX zu übermittelnden Zusatzinformationen wie B-Rufnummer und eine Information, die die Berechtigung zur Inanspruchnahme des Dienstes kennzeichnet, können im Rahmen der ersten oder zweiten Fernmeldeverbindung an die Zielnebenstellenanlage übermittelt werden und werden unter Mitwirkung der Signalisierungseinheit SIU gebildet.

In Fig. 3 ist eine Anordnung zweier Fernmeldenebenstellenanlagen PBX1, PBX2 dargestellt. Jede dieser Nebenstellenanlagen kann wie die in Fig. 1 dargestellte Nebenstellenanlage aufgebaut sein. Beide Nebenstellenanlagen sind über Amtssätze TRUNK1,TRUNK2 mit dem öffentlichen Telefonnetz PSN (Public Switched Network) verbindbar. Außerdem sind beide Fernmeldenebenstellenanlagen über ein öffentliches oder privates Datennetz DN (Data Network) miteinander verbunden. Beispielsweise ist jeder Nebenstellenanlage PBX1,PBX2 über V.24-Schnittstellen eine Unix-Workstation WS zugeordnet, die jeweils eine Schnittstelle NT (Network Termination, z.B. ISO-Schnittstellen 802.3, 802.4, 802.5) zu dem öffentlichen (X.25) oder privaten Datennetz DN bildet. Die Stationen WS können über die Schnittstelle mit einem Local Area Network verbunden sein, das mit einem Ethernet/X.25-Gateway in Verbindung steht. Die beiden Nebenstellenanlagen PBX1,PBX2 können in ein System integriert sein, das im US-Patent 4,313,036 beschrieben ist. Bei dieser in Fig. 3 dargestellten Ausführungsform des erfindungsgemäßen Verfahrens wird eine vom ersten Fernmeldeendgerät T1 erzeugte Wählinformation, die die Zielnebenstellenanlage PBX2 bzw. ein internes oder externes Endgerät T3 bezeichnet, über das Datennetz DN übermittelt. Die Zielnebenstellenanlage PBX2 stellt eine Verbindung zu der Ursprungsfernmeldenebenstellenanlage PBX1 über das öffentliche Telephonnetz (PSN) in der Weise her, daß das erste Fernmeldeendgerät T1 nunmehr den Verbindungsaufbau zu dem gewünschten B-Teilnehmer veranlassen kann. Auch bei dieser Ausführungsform des erfindungsgemäßen Verfahrens kann die B-Teilnehmerrufnummer (T3) im Rahmen der ersten Verbindung (über das Datennetz DN) oder im Rahmen der zweiten Verbindung (über das öffentliche Fernmeldenetz) übermittelt werden. Die erste Verbindung wird bei dieser Ausführungsform des erfindungsgemäßen Verfahrens über das Datennetz DN hergestellt, während die zweite (Rückruf-) Verbindung über das öffentliche Fernmeldenetz hergestellt wird. Die Zielnebenstellenanlage PBX2 speichert, wie schon anhand der Fig. 1 und 2 beschrieben, eine Information der für die Benutzung des öffentlichen Fernmeldenetzes anfallenden Gebühren in einem dem ersten Fernmeldeendgerät T1 zugeordneten Speicher ab.

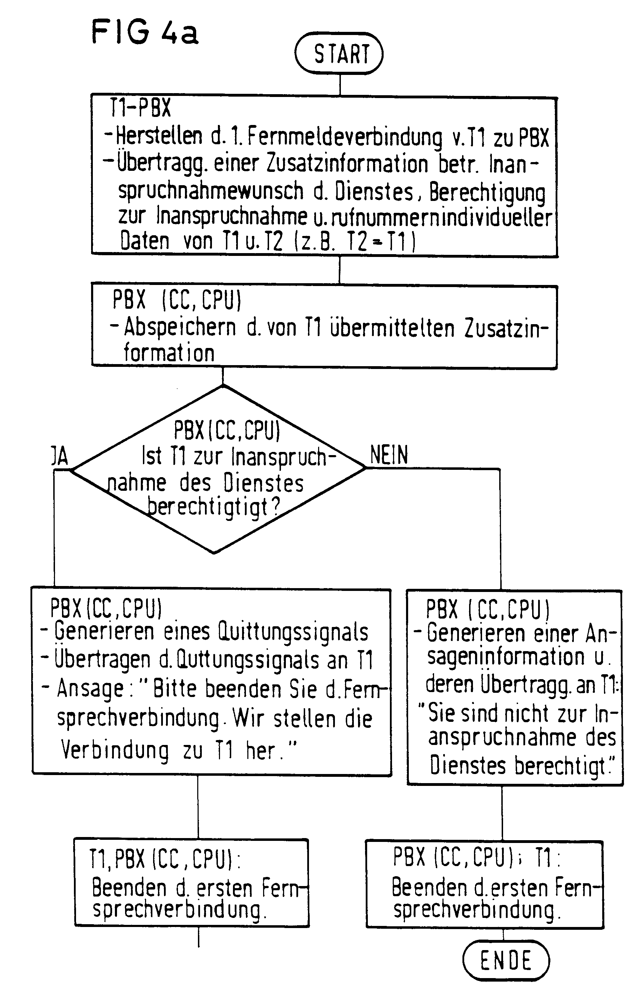

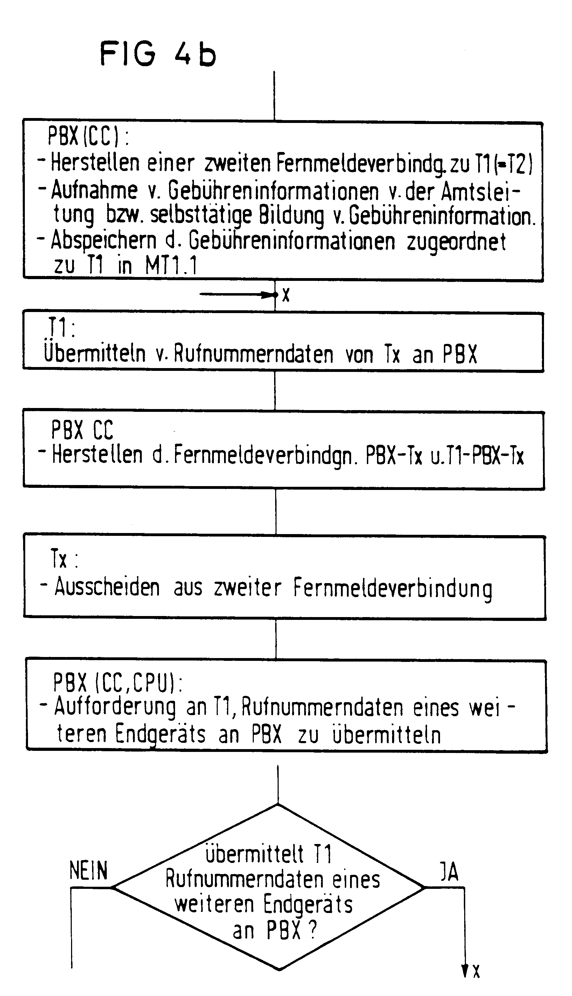

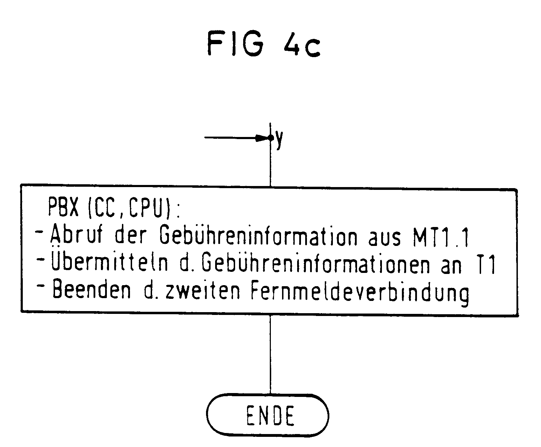

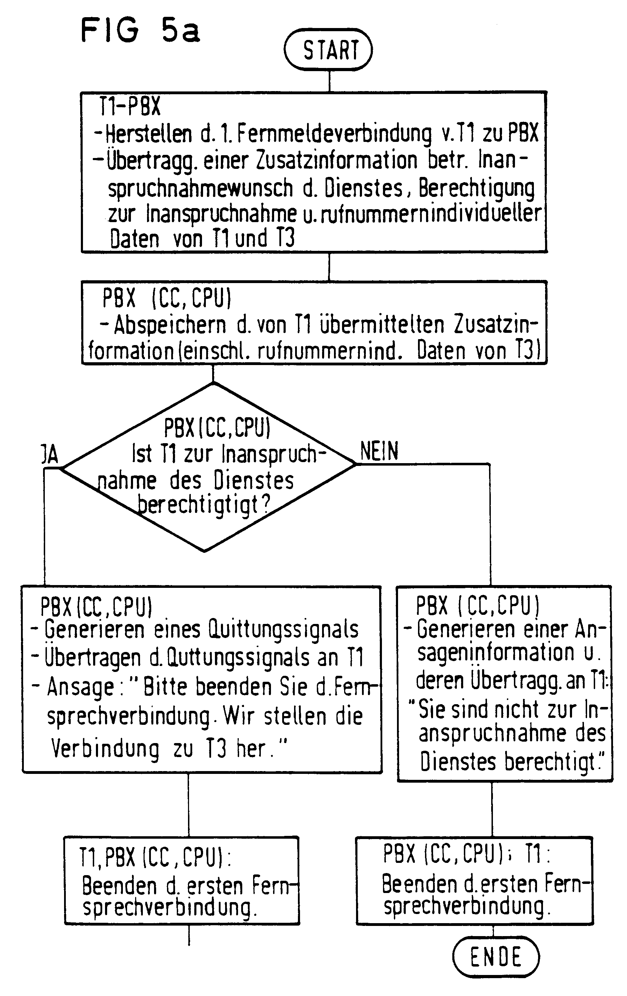

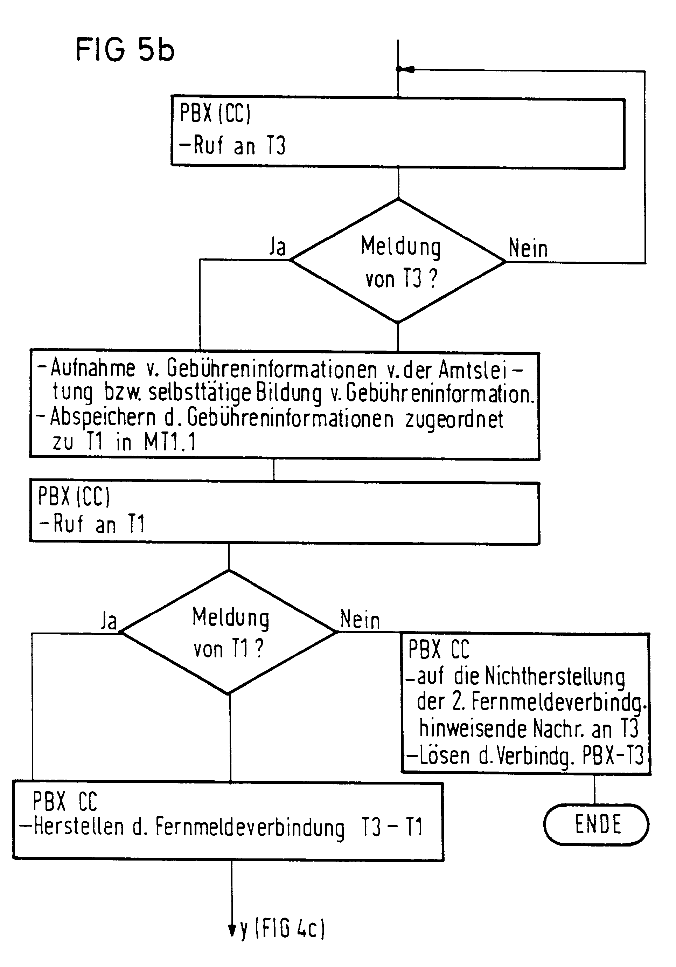

Eine erste Ausführungsform des erfindungsgemäßen Verfahrens wird nun anhand des in Fig. 4 dargestellten Flußdiagramms erläutert. Das erste externe Fernmeldeendgerät T1 stellt über ein öffentliches Fernmeldenetz eine erste Fernmeldeverbindung zu der Nebenstellenanlage PBX her (Fig. 1).

Das erste Fernmeldegerät T1 überträgt im Rahmen der ersten Fernmeldeverbindung eine Zusatzinformation, die auf den Inanspruchnahmewunsch des Dienstes und gegebenenfalls auf die benutzer-und/oder fernmeldeendgeräteindividuelle (T1) Berechtigung zur Inanspruchnahme des Dienstes hinweist. Ferner umfaßt die Zusatzinformation rufnummernindividuelle Daten, die ein zweites Fernmeldeendgerät T2 bezeichnen, zu dem eine zweite Fernmeldeverbindung von der Fernmeldenebenstellenanlage herzustellen ist. Diese Zusatzinformation wird unter Mitwirkung der Signalisierungseinheit SIU gebildet. Bei der vorliegenden ersten Ausführungsform ist vorgesehen, daß die zweite Fernmeldeverbindung zum ersten Fernmeldeendgerät T1 (=T2) herzustellen ist, so daß das erste Fernmeldeendgerät T1 im Rahmen der ersten Fernmeldeverbindung die eigene Rufnummer überträgt. In einem ISDN-System wird die A(=T1)-Rufnummer selbsttätig übertragen, so daß es einer manuellen Eingabe der Rufnummerwählziffern in das Fernmeldeendgerät und einer Bildung entsprechender Tonfrequenzsignale nach einem Mehrfrequenzverfahren durch die Signalisierungseinheit SIU nicht bedarf. Nachdem die Zusatzinformation an die Nebenstellenanlage übermittelt worden ist, was dem ersten Endgerät T1 durch ein Quittungssignal bestätigt werden kann, beendet das erste Fernmeldeendgerät T1 oder die Steuerung (CC,CPN) der Nebenstellenanlage die erste Fernmeldeverbindung. Die Fernmeldenebenstellenanlage speichert die Zusatzinformation zwischen, die für die Prüfung der Berechtigung von T1 und für die Herstellung der zweiten Fernmeldeverbindung verwendet wird.

Die Fernmeldenebenstellenanlage, insbesondere die Steuerung CC in Verbindung mit der Signalisierungseinheit SIU und/oder die Steuerung CPU prüfen nun anhand der übermittelten und abgespeicherten Zusatzinformation, ob das erste Endgerät T1 zur Inanspruchnahme des Dienstes berechtigt ist. Diese Prüfung kann auch bereits im Rahmen der ersten Fernmeldeverbindung durchgeführt werden, was mit dem Vorteil verbunden ist, daß die Nebenstellenanlage dem ersten Fernmeldeendgerät T1 für den Fall eines negativen Prüfungsergebnisses (die Prüfung hat ergeben, daß das erste Fernmeldeendgerät nicht zur Inanspruchnahme des Dienstes berechtigt ist) anstelle des zuvor erwähnten Quittungssignals eine Information übermitteln kann, die auf das negative Prüfungsergebnis hinweist. So kann beispielsweise eine Anzeigeninformation erzeugt werden, die dem unberechtigten ersten Fernmeldeendgerät T1 übermittelt wird. Sofern dieses ein Fernsprechendgerät ist, kann diesem eine Ansage "Sie sind nicht zur Inanspruchnahme des Dienstes berechtigt" zugesprochen werden. Sonstigen Fernmeldeendgeräten (Faxgeräte, Personalcomputer) werden systemkonforme Mitteilungen zugestellt. Danach wird die 1. Fernmeldeverbindung beendet.

Ergibt die Berechtigungsprüfung im Rahmen der ersten Fernmeldeverbindung, daß T1 zur Inanspruchnahme des Dienstes berechtigt ist, wird dem Teilnehmer T1 ein entsprechendes von der Signalisierungseinheit SIU gebildetes Quittungssignal übermittelt, gegebenenfalls auch die Ansage/Mitteilung "Bitte beenden Sie die Verbindung, wir stellen eine Verbindung zu T1 her."

Bei einem positiven Ergebnis der Berechtigungsüberprüfung stellt die Steuerung CC dann die zweite Fernmeldeverbindung zu dem ersten Fernmeldeendgerät T1 her. Mit dem Beginn der zweiten Fernmeldeverbindung nimmt die Fernmeldenebenstellenanlage Gebühreninformationen von der Amtsleitung auf bzw. initiiert die selbsttätige Bildung entsprechender Gebühreninformationen. Diese Gebühreninformationen werden in den dem ersten Fernmeldeendgerät T1 zugeordneten Gebührenspeicher MT1.1 abgespeichert.

Im Rahmen der zweiten Fernmeldeverbindung kann dem zweiten Endgerät T2, insbesondere für den Fall, daß dieses nicht gleich dem ersten Fernmeldeendgerät T1 ist, eine Fernmeldenachricht übermittelt werden, die das erste Fernmeldeendgerät T1 im Rahmen der ersten Fernmeldeverbindung der Nebenstellenanlage PBX übermittelt hat und insbesondere im Speicher VM des Schaltungsmoduls SM zwischengespeichert ist.

Für den Fall, daß das zweite Fernmeldeendgerät T2 gleich dem ersten Fernmeldeendgerät T1 ist, kann vorgesehen sein, daß das erste Fernmeldeendgerät zu Beginn der zweiten Fernmeldeverbindung die Rufnummer eines dritten Fernmeldeendgeräts T3 der Fernmeldenebenstellenanlage übermittelt. Diese unternimmt einen Verbindungsherstellungsversuch zu dem entsprechenden dritten Fernmeldeendgerät T3 (="Tx"). Die zweite Fernmeldeverbindung wird durch das erste oder das dritte Fernmeldeendgerät beendet. Das erste Endgerät kann jedoch die bereits hergestellte zweite Fernmeldeverbindung weitergehend benutzen. Scheidet das dritte Fernmeldeendgerät aus der zweiten Fernmeldeverbindung aus, so kann das erste Fernmeldeendgerät die Rufnummerndaten eines weiteren Fernmeldeendgeräts an die Nebenstellenanlage übermitteln. Die Steuerung CC der Fernmeldenebenstellenanlage verbindet dann im Rahmen der weiterhin bestehenden zweiten Fernmeldeverbindung das erste Fernmeldeendgerät T1 und das weitere Fernmeldeendgerät miteinander.

Es ist vorgesehen, daß das spezielle, hierzu berechtigte erste Fernmeldeendgerät T1 die ihm zugeordneten Gebühreninformationen im Speicher MT1.1 abfragen kann. Alternativ kann vorgesehen sein, daß die Nebenstellenanlage dem speziellen Endgerät T1 die entsprechenden Gebühreninformationen zustellt, insbesondere zum Abschluß einer zweiten Verbindung.

In die den jeweiligen ersten Fernmeldeendgeräten T1 zugeordneten Speicher MT1.1, MT1.2,...MT1.n werden die vom entsprechenden öffentlichem Amt über eine Amtsleitung übermittelten Gebühreninformationen abgespeichert. Insbesondere kann das Programm, das der Steuerung CC und/oder der Steuerung CPU des Schaltungsmoduls SM zugeordnet ist, in der Weise ausgestaltet sein, daß Informationen in die genannten Speicher abgespeichert werden, welche einen über den amtlichen Gebühren liegenden Wert bezeichnen, der die Kosten für die Benutzung der Fernmeldenebenstellenanlage mitberücksichtigt.

Ferner kann auch vorgesehen sein, daß die zwischengeschaltete Fernmeldenebenstellenanlage bei Erreichen eines vorgegebenen Gebührenwertes, gegebenenfalls nach einem entsprechenden Hinweis an das erste Fernmeldeendgerät, die zweite Fernmeldeverbindung beendet.

Eine zweite Ausführungsform des erfindungsgemäßen Verfahrens ist im Flußdiagramm der Fig. 5 erläutert. Die zweite Ausführungsform des erfindungsgemäßen Verfahrens unterscheidet sich von der ersten Ausführungsform zunächst dadurch, daß das erste Fernmeldeendgerät T1 im Rahmen der ersten Verbindung sowohl die eigene Rufnummer als auch rufnummernindividuelle Daten des gewünschten B-Teilnehmers T3 überträgt. Die weiteren Verfahrensschritte bis zum Beenden der ersten Fernsprechverbindung sind gleich den entsprechenden Verfahrensschritten bei der ersten Ausführungsform des erfindungsgemäßen Verfahrens (Fig. 5a, Fig. 4a).

Im nächsten Verfahrensschritt der zweiten Ausführungsform des erfindungsgemäßen Verfahrens ruft die Nebenstellenanlage den gewünschten B-Teilnehmer T3 (Fig. 5b). Meldet sich dieser nicht, so kann der Ruf um eine vorgebbare Anzahl wiederholt werden, bis sich T3 meldet. Meldet sich das dritte Fernmeldeendgerät T3 und ist dieses bezüglich der Nebenstellenanlage ein externes Endgerät, so nimmt die Nebenstellenanlage Gebühreninformationen von der Amtsleitung auf bzw. initiert die selbsttätige Bildung entsprechender Gebühreninformationen. Diese Gebühreninformationen werden in den dem ersten Fernmeldeendgerät T1 zugeordneten Gebührenspeicher MT1.1 abgespeichert. Nach der Meldung von T3 ruft die Nebenstellenanlage das erste Fernmeldeendgerät T1. Meldet sich dieses nicht, veranlaßt die Steuerung der Nebenstellenanlage die Generierung einer auf die Nichtherstellung der zweiten Fernmeldeverbindung hinweisende Nachricht und führt diese Nachricht dem Endgerät T3 zu. Im Anschluß daran wird die Verbindung zu T3 gelöst.

Meldet sich dagegen das erste Fernmeldeendgerät, stellt die Nebenstellenanlage die Fernmeldeverbindung zwischen dem dritten und dem ersten Fernmeldeendgerät her. Die weiteren Verfahrensschritte entsprechen den im Zusammenhang mit der ersten Ausführungsform des erfindungsgemäßen Verfahrens beschriebenen Verfahrensschritten (Fig. 4c).

## Patentansprüche

1. Verfahren zur Herstellung von Fernmeldeverbindungen über ein öffentliches Fernmeldenetz von einem ersten Fernmeldeendgerät (T1) zu einer dem ersten Fernmeldeendgerät (T1) nicht zugeordneten Fernmeldenebenstellenanlage (PBX), wobei das erste Fernmeldeendgerät (T1) eine erste Fernmeldeverbindung zu der Fernmeldenebenstellenanlage (PBX) herstellt, wobei die erste Fernmeldeverbindung beendet wird, wobei eine Steuerung (CC) der Fernmeldenebenstellenanlage (PBX) ausgelöst durch die erste Fernmeldeverbindung eine zweite Fernmeldeverbindung zu einem zweiten Fernmeldeendgerät (T2) herstellt,
**dadurch gekennzeichnet**,
daß die Steuerung (CC) der Fernmeldenebenstellenanlage (PBX), die zweite Fernmeldeverbindung zum ersten Fernmeldeendgerät (T1=T2) herstellt und sofern das erste Fernmeldeendgerät (T1) ein externes über das öffentliche Fernmeldenetz mit der Fernmeldenebenstellenanlage (PBX) verbindbares Fernmeldeendgerät ist, eine Information der für die Benutzung des öffentlichen Fernmeldenetzes anfallenden Gebühren der zweiten Fernmeldeverbindung in einem dem ersten Fernmeldeendgerät (T1) zugeordneten Speicher (MT1) abspeichert.

2. Verfahren nach Anspruch 1,
**dadurch gekennzeichnet**,
daß das erste Fernmeldeendgerät (T1) im Rahmen der ersten Fernmeldeverbindung Rufnummerndaten eines dritten Fernmeldeendgerätes (T3) übermittelt, und daß die Steuerung (CC) der Fernmeldenebenstellenanlage (PBX) im Rahmen der zweiten Fernmeldeverbindung das erste Fernmeldeendgerät (T1) und das dritte Fernmeldeendgerät (T3) miteinander verbindet.

3. Verfahren nach Anspruch 2,
**dadurch gekennzeichnet**,
daß die Steuerung (CC) der Fernmeldenebenstellenanlage (PBX) zur Herstellung der zweiten Fernmeldeverbindung das dritte Fernmeldeendgerät (T3) ruft und, sofern sich dieses meldet, das erste Fernmeldegerät (T1) ruft und daß die Steuerung (CC) daran anschließend das erste Fernmeldegerät (T1) und das dritte Fernmeldeendgerät (T3) miteinander verbindet.

4. Verfahren nach Anspruch 1,
**dadurch gekennzeichnet**,
daß die Steuerung (CC) der Fernmeldenebenstellenanlage (PBX) die zweite Fernmeldeverbindung zum ersten Fernmeldeendgerät (T1) herstellt, daß das erste Fernmeldeendgerät (T1) im Rahmen der zweiten Fernmeldeverbindung Rufnummerndaten eines dritten Fernmeldeendgerätes (T3) übermittelt, und daß die Steuerung (CC) der Fernmeldenebenstellenanlage (PBX) im Rahmen der zweiten Fernmeldeverbindung das erste Fernmeldeendgerät (T1) und das dritte Fernmeldeendgerät (T3) miteinander verbindet.

5. Verfahren nach einem der Ansprüche 2 bis 4,
**dadurch gekennzeichnet**,
daß das erste Fernmeldeendgerät (T1) im Rahmen der zweiten Fernmeldeverbindung, nachdem das dritte Fernmeldeendgerät (T3) aus der zweiten Fernmeldeverbindung ausgeschieden ist, Rufnummerndaten eines weiteren Fernmeldeendgeräts übermittelt, und daß die Steuerung (CC) der Fernmeldenebenstellenanlage (PBX) im Rahmen der zweiten Fernmeldeverbindung das erste Fernmeldeendgerät (T1) und das weitere Fernmeldeendgerät miteinander verbindet.

6. Verfahren nach einem der vorhergehenden Ansprüche,
**dadurch gekennzeichnet**,
daß das erste Fernmeldeendgerät (T1) im Rahmen der ersten Fernmeldeverbindung eine Information über eine benutzer- und/oder fernmeldeendgeräteindividuelle Berechtigung zur Inanspruchnahme des im Zusammenhang mit der Herstellung der zweiten Fernmeldeverbindung stehenden Dienstes an die Fernmeldenebenstellenanlage (PBX) übermittelt, und daß die Steuerung (CC) der Fernmeldenebenstellenanlage (PBX) die benutzerund/oder fernmeldeendgeräteindividuelle Berechtigung überprüft und in Abhängigkeit des Überprüfungsergebnisse die zweite Fernmeldeverbindung herstellt.

7. Verfahren nach einem der vorhergehenden Ansprüche,
**dadurch gekennzeichnet**,
daß das erste Fernmeldeendgerät (T1) der Fernmeldenebenstellenanlage (PBX) eine Information über den Zeitpunkt und/oder die Anzahl der von der Steuerung (CC) der Fernmeldenebenstellenanlage (PBX) vorzunehmenden Versuche der Herstellung einer zweiten Fernmeldeverbindung übermittelt und daß die Steuerung (CC) zu dem durch die Zusatzinformation bestimmten Zeitpunkt und/oder in der durch die Zusatzinformation bestimmten Anzahl Versuche zur Herstellung der zweiten Fernmeldeverbindung unternimmt.

8. Verfahren nach einem der Ansprüche 2 bis 7,
**dadurch gekennzeichnet**,
daß die Steuerung (CC) der Fernmeldenebenstellenanlage (PBX) zur Herstellung der zweiten Fernmeldeverbindung das dritte Fernmeldeendgerät (T3) ruft und, sofern sich dieses nicht meldet, das erste Fernmeldegerät (T1) ruft und diesem eine auf die Nichtherstellung der zweiten Fernmeldeverbindung hinweisende Nachricht übermittelt.

9. Verfahren nach einem der vorhergehenden Ansprüche,
**dadurch gekennzeichnet**,
daß das erste Fernmeldeendgerät (T1) im Rahmen der ersten Fernmeldeverbindung eine Fernmeldenachricht übermittelt und daß die Steuerung (CC) der Fernmeldenebenstellenanlage (PBX) die Fernmeldenachricht dem zweiten Fernmeldeendgerät (T2) im Rahmen der zweiten Fernmeldeverbindung übermittelt.

10. Verfahren zur Herstellung von Fernmeldeverbindungen über ein öffentliches Fernmeldenetz von einem ersten Fernmeldeendgerät (T1) einer ersten Fernmeldenebenstellenanlage (PBX1) zu einer zweiten, eine Steuerung (CC) enthaltenden Fernmeldenebenstellenanlage (PBX2),
**dadurch gekennzeichnet**,
daß die von dem ersten Fernmeldeendgerät (T1) erzeugte Wählinformation zur Herstellung einer ersten Fernmeldeverbindung zu der zweiten Fernmeldenebenstellenanlage (PBX2) über eine die erste und die zweite Fernmeldenebenstellenanlage (PBX1, PBX2) verbindende Datenleitung (X.25) übermittelt wird, daß die zweite Fernmeldenebenstellenanlage (PBX2) entsprechend der übermittelten Wählinformation eine Verbindung zu dem ersten Fernmeldeendgerät (T1) über das öffentliche Fernmeldenetz aufbaut, das erste Fernmeldeendgerät (T1) mit einem weiteren Fernmeldeendgerät (T3) verbindet und eine Information der für die Benutzung des öffentlichen Fernmeldenetzes anfallenden Gebühren in einem dem ersten Fernmeldeendgerät (T1) zugeordneten Speicher (MT1) abspeichert.

11. Verfahren nach einem der vorstehenden Ansprüche,
**dadurch gekennzeichnet**,
daß die Steuerung (CC) der dem ersten Fernmeldeendgerät (T1) nicht zugeordneten Fernmeldenebenstellenanlage (PBX, PBX2) die dem ersten Fernmeldeendgerät (T1) zugeordneten, abgespeicherten Gebühreninformationen abruft und einer vorbestimmten, externen Einrichtung (T1) übermittelt.

12. Verfahren nach einem der vorstehenden Ansprüche,
**dadurch gekennzeichnet**,
daß der dem ersten Fernmeldeendgerät (T1) nicht zugeordneten Fernmeldenebenstellenanlage (PBX,PBX2) bei Verbindungen zu externen Fernmeldeendgeräten (T1, T2, T3) von außen Informationen der für die Benutzung des öffentlichen Fernmeldenetzes anfallenden Gebühren übermittelt werden, und daß die Steuerung (CC) diese Informationen direkt oder aus diesen Informationen abgeleitete Gebühreninformationen in ersten Fernmeldeendgeräten (T1) zugeordnete Speicher (MT1.1, MT1.2, ... MT1.n) abspeichert.

13. Fernmeldenebenstellenanlage (PBX2) mit einer Steuerung (CC) zur Durchführung eines Verfahrens zur Herstellung von Fernmeldeverbindungen über ein öffentliches Fernmeldenetz von einem ersten Fernmeldeendgerät (T1) einer weiteren Fernmeldenebenstellenanlage (PBX1) zu der Fernmeldenebenstellenanlage (PBX2),
**gekennzeichnet** durch einen bestimmten ersten Endgeräten (T1) zugeordneten Gebühreninformationsspeicher (MT1.1, MT1.2, ...MT1.n), durch eine die Fernmeldenebenstellenanlage (PBX2) mit der weiteren Fernmeldenebenstellenanlage (PBX1) PBX2) verbindende Datenleitung (X.25) zum Übermitteln der von dem ersten Fernmeldeendgerät (T1) erzeugten Wählinformation zur Herstellung einer ersten Fernmeldeverbindung zu der Fernmeldenebenstellenanlage (PBX2) und durch ein der Steuerung (CC) zugeordnetes, das Verfahren definierendes Programm, zum Aufbauen einer Verbindung über das öffentliche Fernmeldenetz zu dem ersten Fernmeldeendgerät (T1) entsprechend der übermittelten Wählinformation, zum Verbinden des ersten Fernmeldeendgeräts (T1) mit einem weiteren Fernmeldeendgerät (T3) und zum Abspeichern einer Information der für die Benutzung des öffentlichen Fernmeldenetzes anfallenden Gebühren in dem dem ersten Fernmeldeendgerät (T1) zugeordneten Gebühreninformationsspeicher (MT1) durch die Fernmeldenebenstellenanlage (PBX2).

14. Fernmeldenebenstellenanlage (PBX) mit einer Steuerung (CC) zur Durchführung eines Verfahrens zur Herstellung von Fernmeldeverbindungen über ein öffentliches Fernmeldenetz von einem ersten, der Fernmeldenebenstellenanlage (PBX) nicht zugeordneten Fernmeldeendgerät (T1) zur Fernmeldenebenstellenanlage (PBX), wobei das erste Fernmeldeendgerät (T1) eine erste Fernmeldeverbindung zu der Fernmeldenebenstellenanlage (PBX) herstellt und wobei die erste Fernmeldeverbindung beendet wird,
**gekennzeichnet** durch einen bestimmten ersten Endgeräten (T1) zugeordneten Gebühreninformationsspeicher (MT1.1, MT1.2, ...MT1.n) und durch eine Steuerung (CC), der ein das Verfahren definierendes Programm zugeordnet ist, zum durch die erste Fernmeldeverbindung ausgelösten Herstellen einer zweiten Fernmeldeverbindung zu einem zweiten Fernmeldeendgerät (T2) sowie zum Herstellen der zweiten Fernmeldeverbindung zum ersten Fernmeldeendgerät (T1=T2) und zum Abspeichern einer Information der für die Benutzung des öffentlichen Fernmeldenetzes anfallenden Gebühren der zweiten Fernmeldeverbindung in dem dem ersten Fernmeldeendgerät (T1) zugeordneten Gebühreninformationsspeicher (MT1), sofern das erste Fernmeldeendgerät (T1) ein externes über das öffentliche Fernmeldenetz mit der Fernmeldenebenstellenanlage (PPX) verbindbares Fernmeldeendgerät ist.

15. Fernmeldenebenstellenanlage nach Anspruch 13 oder 14,
**gekennzeichnet** durch ein mit der Steuerung (CC) der dem ersten Fernmeldeendgerät (T1) nicht zugeordneten Fernmeldenebenstellenanlage (PBX, PBX2) verbindbares Schaltungsmodul (SM) mit einer Steuerung (CPU), der mindestens ein Teil des das Verfahren definierenden Programms zugeordnet ist, und dadurch, daß das Schaltungsmodul (SM) die Gebühreninformationsspeicher (MT1.1, MT1.2, ... MT1.n) enthält.

## Claims

1. Method for establishing telecommunication connections via a public telecommunication network from a first telecommunication terminal (T1) to a telecommunication private branch exchange (PBX) not assigned to the first telecommunication terminal (T1), in which the first telecommunication terminal (T1) establishes a first telecommunication connection to the telecommunication private branch exchange (PBX), in which the first telecommunication connection is terminated, in which, initiated by the first telecommunication connection, a controller (CC) of the telecommunication private branch exchange (PBX) establishes a second telecommunication connection to a second telecommunication terminal (T2), characterized in that the controller (CC) of the telecommunication private branch exchange (PBX) establishes the second telecommunication connection to the first telecommunication terminal (T1=T2) and, provided that the first telecommunication terminal (T1) is an external telecommunication terminal that can be connected to the telecommunication private branch exchange (PBX) via the public telecommunication network, stores information about the charges incurred by the use of the public telecommunication network for the second telecommunication connection in a memory (MT1) assigned to the first telecommunication terminal (T1).

2. Method according to Claim 1, characterized in that in the course of the first telecommunication connection, the first telecommunication terminal (T1) transmits call number data of a third telecommunication terminal (T3), and in that in the course of the second telecommunication connection, the controller (CC) of the telecommunication private branch exchange (PBX) connects the first telecommunication terminal (T1) and the third telecommunication terminal (T3) to one another.

3. Method according to Claim 2, characterized in that, to establish the second telecommunication connection, the controller (CC) of the telecommunication private branch exchange (PBX) calls the third telecommunication terminal (T3) and, provided that the latter answers, calls the first telecommunication terminal (T1), and in that following this the controller (CC) connects the first telecommunication terminal (T1) and the third telecommunication terminal (T3) to one another.

4. Method according to Claim 1, characterized in that the controller (CC) of the telecommunication private branch exchange (PBX) establishes the second telecommunication connection to the first telecommunication terminal (T1), in that in the course of the second telecommunication connection, the first telecommunication terminal (T1) transmits call number data of a third telecommunication terminal (T3), and in that in the course of the second telecommunication connection, the controller (CC) of the telecommunication private branch exchange (PBX) connects the first telecommunication terminal (T1) and the third telecommunication terminal (T3) to one another.

5. Method according to one of Claims 2 to 4, characterized in that in the course of the second telecommunication connection, after the third telecommunication terminal (T3) has exited from the second telecommunication connection, the first telecommunication terminal (T1) transmits call number data of a further telecommunication terminal, and in that in the course of the second telecommunication connection, the controller (CC) of the telecommunication private branch exchange (PBX) connects the first telecommunication terminal (T1) and the further telecommunication terminal to one another.

6. Method according to one of the preceding claims, characterized in that in the course of the first telecommunication connection, the first telecommunication terminal (T1) transmits to the telecommunication private branch exchange (PBX) information about a user-specific and/or telecommunication terminal-specific authorization for the use of the service provided in connection with the establishment of the second telecommunication connection, and in that the controller (CC) of the telecommunication private branch exchange (PBX) checks the user-specific and/or telecommunication terminal-specific authorization and establishes the second telecommunication connection depending on the result of the check.

7. Method according to one of the preceding claims, characterized in that the first telecommunication terminal (T1) of the telecommunication private branch exchange (PBX) transmits information about the time and/or the number of establishment attempts to be made by the controller (CC) of the telecommunication private branch exchange (PBX) for a second telecommunication connection, and in that the controller (CC) attempts to establish the second telecommunication connection at the time specified by the additional information and/or for the number of times specified by the additional information.

8. Method according to one of Claims 2 to 7, characterized in that, to establish the second telecommunication connection, the controller (CC) of the telecommunication private branch exchange (PBX) calls the third telecommunication terminal (T3), and, if the latter does not answer, calls the first telecommunication terminal (T1) and transmits to the latter a message indicating that the second telecommunication connection was not established.

9. Method according to one of the preceding claims, characterized in that in the course of the first telecommunication connection, the first telecommunication terminal (T1) transmits a telecommunication message, and in that in the course of the second telecommunication connection, the controller (CC) of the telecommunication private branch exchange (PBX) transmits the telecommunication message to the second telecommunication terminal (T2).

10. Method for establishing telecommunication connections via a public telecommunication network from a first telecommunication terminal (T1) of a first telecommunication private branch exchange (PBX1) to a second telecommunication private branch exchange (PBX2) containing a controller (CC), characterized in that, for establishing a first telecommunication connection to the second telecommunication private branch exchange (PBX2), the dialling information generated by the first telecommunication terminal (T1) is transmitted via a data line (X.25) connecting the first and the second telecommunication private branch exchange (PBX1, PBX2), in that in accordance with the dialling information transmitted, the second telecommunication private branch exchange (PBX2) establishes a connection to the first telecommunication terminal (T1) via the public telecommunication network, connects the first telecommunication terminal (T1) to a further telecommunication terminal (T3), and stores information about the charges incurred by the use of the public telecommunication network in a memory (MT1) assigned to the first telecommunication terminal (T1).

11. Method according to one of the preceding claims, characterized in that the controller (CC) of the telecommunication private branch exchange (PBX, PBX2) not assigned to the first telecommunication terminal (T1) calls up the stored charge information assigned to the first telecommunication terminal (T1) and transmits it to a predetermined external device (T1).

12. Method according to one of the preceding claims, characterized in that in the case of connections to external telecommunication terminals (T1, T2, T3), information about the charges incurred by the use of the public telecommunication network is transmitted from outside to the telecommunication private branch exchange (PBX, PBX2) not assigned to the first telecommunication terminal (T1), and in that the controller (CC) stores said information directly or charge information extracted from said information in memories (MT1.1, MT1.2, ... MT1.n) assigned to first telecommunication terminals (T1).

13. Telecommunication private branch exchange (PBX2) having a controller (CC) for carrying out a method for establishing telecommunication connections via a public telecommunication network from a first telecommunication terminal (T1) of a further telecommunication private branch exchange (PBX1) to the telecommunication private branch exchange (PBX2), characterized by a charge information memory (MT1.1, MT1.2, ... MT1.n) assigned to particular first terminals (T1), by a data line (X.25) connecting the telecommunication private branch exchange (PBX2) to the further telecommunication private branch exchange (PBX1, PBX2) for transmitting the dialling information generated by the first telecommunication terminal (T1) to establish a first telecommunication connection to the telecommunication private branch exchange (PBX2), and by a program defining the method which is assigned to the controller (CC) for establishing a connection via the public telecommunication network to the first telecommunication terminal (T1) in accordance with the dialling information transmitted, for connecting the first telecommunication terminal (T1) to a further telecommunication terminal (T3), and for storing information about the charges incurred by the use of the public telecommunication network in the charge information memory (MT1) assigned to the first telecommunication terminal (T1) by the telecommunication private branch exchange (PBX2).

14. Telecommunication private branch exchange (PBX) having a controller (CC) for carrying out a method for establishing telecommunication connections via a public telecommunication network from a first telecommunication terminal (T1) not assigned to the telecommunication private branch exchange (PBX) to the telecommunication private branch exchange (PBX), in which the first telecommunication terminal (T1) establishes a first telecommunication connection to the telecommunication private branch exchange (PBX) and in which the first telecommunication connection is terminated, characterized by a charge information memory (MT1.1, MT1.2, ... MT1.n) assigned to particular first terminals (T1), and by a controller (CC), to which a program defining the method is assigned, for establishing a second telecommunication connection, initiated by the first telecommunication connection, to a second telecommunication terminal (T2), and also for establishing the second telecommunication connection to the first telecommunication terminal (T1=T2), and for storing information about the charges incurred by the use of the public telecommunication network for the second telecommunication connection in the charge information memory (MT1) assigned to the first telecommunication terminal (T1), provided that the first telecommunication terminal (T1) is an external telecommunication terminal that can be connected to the telecommunication private branch exchange (PBX) via the public telecommunication network.

15. Telecommunication private branch exchange according to Claim 13 or 14, characterized by a circuit module (SM) which can be connected to the controller (CC) of the telecommunication private branch exchange (PBX, PBX2) not assigned to the first telecommunication terminal (T1) and which has a controller (CPU), to which at least part of the program defining the method is assigned, and by the fact that the circuit module (SM) contains the charge information memory (MT1.1, MT1.2, ... MT1.n).

## Revendications

1. Procédé pour établir des liaisons de télécommunication par l'intermédiaire d'un réseau public de télécommunication depuis un premier terminal de télécommunication (T1) à une installation de télé-communication à postes supplémentaires (PBX), qui n'est pas associée au premier terminal de télécommunication (T1), et selon lequel le premier terminal de télécommunication (T1) établit une première liaison de télécommunication avec l'installation de télécommunication à postes supplémentaires (PBX), la première liaison de télécommunication est interrompue et une unité de commande (CC) de l'installation de télécommunication à postes supplémentaires (PBX) établit une seconde liaison de télécommunication avec un second terminal de télécommunication (T2), d'une manière déclenchée par la première liaison de télécommunication,
caractérisé par le fait que
l'unité de commande (CC) de l'installation de télécommunication à postes supplémentaires (PBX) établit la seconde liaison de télécommunication avec le premier terminal de télécommunication (T1=T2) et, dans la mesure où le premier terminal de télécommunication (T1) est un terminal de télécommunication extérieur qui peut être relié à l'installation de télécommunication à postes supplémentaires (PBX) par l'intermédiaire du réseau public de télécommunication, mémorise une information des taxes, qui sont dues pour l'utilisation du réseau public de télécommunication, de la seconde liaison de télécommunication dans une mémoire (MT1) associée au premier terminal de télécommunication (T1).

2. Procédé suivant la revendication 1, caractérisé par le fait que le premier terminal de télécommunication (T1) retransmet, dans le cadre de la première liaison de télécommunication, des données de numéro d'appel d'un troisième terminal de télécommunication (T3), et que l'unité de commande (CC) de l'installation de télécommunication à postes supplémentaires (PBX) relie entre eux, dans le cadre de la seconde liaison de télécommunication, le premier terminal de télécommunication (T1) et le troisième terminal de télécommunication (T3).

3. Procédé suivant la revendication 2, caractérisé par le fait que l'unité de commande (CC) de l'installation de télécommunication à postes supplémentaires (PBX) appelle le troisième terminal de télécommunication (T3) pour l'établissement de la seconde liaison de télécommunication et, dans la mesure où ce terminal se signale, appelle le premier terminal de télécommunication (T1) et que l'unité de commande (CC) relie ensuite entre eux le premier terminal de télécommunication (T1) et le troisième terminal de télécommunication (T3).

4. Procédé suivant la revendication 1, caractérisé par le fait que l'unité de commande (CC) de l'installation de télécommunication à postes supplémentaires (PBX) établit la seconde liaison de télécommunication avec le premier terminal de télécommunication (T1), que le premier terminal de télécommunication (T1) retransmet, dans le cadre de la seconde liaison de télécommunication, des données de numéro d'appel d'un troisième de télécommunication (T3), et que l'unité de commande (CC) de l'installation de télécommunication à postes supplémentaires (PBX) relie entre eux, dans le cadre de la seconde liaison de télécommunication, le premier terminal de télécommunication (T1) et le troisième terminal de télécommunication (T3).

5. Procédé suivant les revendications 2 à 4, caractérisé par le fait que le premier terminal de télécommunication (T1) retransmet des données de numéro d'appel d'un autre terminal de télécommunication dans le cadre de la seconde liaison de télécommunication, une fois que le troisième terminal de télécommunication (T3) s'est retiré de la seconde liaison de télécommunication, et que l'unité de commande (CC) de l'installation de télécommunication à postes supplémentaires (PBX) relie entre eux, dans le cas de la seconde liaison de télécommunication, le premier terminal de télécommunication (T1) et l'autre terminal de télécommunication.

6. Procédé suivant l'une des revendications précédentes, caractérisé par le fait que dans le cadre de la première liaison de télécommunication, le premier terminal de télécommunication (T1) retransmet une information concernant une autorisation associée individuellement à un utilisateur et/ou à un terminal de télécommunication, pour la mise en oeuvre du service qui est associé à I'établissement de la seconde liaison de télécommunication, à l'installation de télécommunication à postes supplémentaires (PBX), et que l'unité de commande (cc) de l'installation de télécommunication à postes supplémentaires (PBX) vérifie l'autorisation associée individuellement à l'utilisateur et/ou au terminal de télécommunication et établit la seconde liaison de télécommunication en fonction du résultat du contrôle.

7. Procédé selon l'une des revendications précédentes, caractérisé par le fait que le premier terminal de télécommunication (T1) de l'installation de télécommunication à postes supplémentaires (PBX) retransmet une information concernant l'instant et/ou le nombre des tentatives d'établissement d'une seconde liaison de télécommunication, qui doivent être exécutées par l'unité de commande (CC) de l'installation de télécommunication à postes supplémentaires (PBX), et que l'unité de commande (CC) exécute, à l'instant déterminé par l'information supplémentaire et/ou en un nombre déterminé par l'information supplémentaire, des tentatives d'établissement de la seconde liaison de télécommunication.

8. Procédé suivant l'une des revendications 2 à 7, caractérisé par le fait que l'unité de commande (CC) de l'installation de télécommunication à postes supplémentaires (PBX) appelle le troisième terminal de télécommunication (T3) pour l'établissement de la seconde liaison de télécommunication et, dans la mesure où ce terminal ne se signale pas, appelle le premier terminal de télécommunication (T1) et transmet à ce dernier un message indiquant le non établissement de la seconde liaison de télécommunication.

9. Procédé suivant l'une des revendications précédentes, caractérisé par le fait que dans le cadre de la première liaison de télécommunication, le premier terminal de télécommunication (T1) retransmet un message de télécommunication et que l'unité de commande (CC) de l'installation de télécommunication à postes supplémentaires (PBX) retransmet le message de télécommunication au second terminal de télécommunication (T2), dans le cadre de la seconde liaison de télécommunication.

10. Procédé pour établir des liaisons de télécommunication par l'intermédiaire d'un réseau public de télécommunication depuis un premier terminal de télécommunication (T1) depuis une première installation de télécommunication à postes supplémentaires (PBX1) avec une seconde installation de télécommunication à postes supplémentaires (PBX2) contenant une unité de commande (CC), caractérisé par le fait que l'information de sélection qui est produite par le premier terminal de télécommunication (T1), est transmise, pour l'établissement d'une première liaison de télécommunication avec la seconde installation de télécommunication à postes supplémentaires (PBX2), par l'intermédiaire d'une ligne de transmission de données (X.25), qui relie les première et seconde installations de télécommunication à postes supplémentaires (PBX1, PBX2), que la seconde installation de télécommunication à postes supplémentaires (PBX2) établit, conformément à l'information de sélection transmise, une liaison avec le premier terminal de télécommunication (T1), par l'intermédiaire du réseau public de télécommunication, relie le premier terminal de télécommunication (T1) à un autre terminal de télécommunication (T3) et mémorise une information des taxes, qui sont dues pour l'utilisation du réseau public de télécommunication, dans une mémoire (MT) associée au premier terminal de télécommunication (T1).

11. Procédé suivant l'une des revendications précédentes, caractérisé par le fait que l'unité de commande (CC) de l'installation de télécommunication à postes supplémentaires (PBX, PBX2), non associée au premier terminal de télécommunication (T1), appelle les informations de taxes mémorisées et associées au premier terminal de télécommunication (T1) et les retransmet à un dispositif externe prédéterminé (T1).

12. Procédé suivant l'une des revendications précédentes, caractérisé par le fait que dans le cas de liaisons avec des terminaux externes de télécommunication (T1, T2, T3), des informations des taxes, qui sont dues pour l'utilisation du réseau public de télécommunication, sont transmises de l'extérieur à l'installation de télécommunication à postes supplémentaires (PBX1, PBX2), qui n'est pas associée, au premier terminal de télécommunication (T1), et que l'unité de commande (CC) mémorise directement ces informations ou bien des informations de taxes, dérivées de ces informations, dans des mémoires (MT1.1, MT1.2, ..., MT1.n) associées à des premiers terminaux de télécommunication (T1).

13. Installation de télécommunication à postes supplémentaires (PBX2) comportant une unité de commande (CC) pour la mise en oeuvre d'un procédé pour établir des liaisons de télécommunication par l'intermédiaire d'un réseau public de télécommunication depuis un premier terminal de télécommunication (T1) d'une autre installation de télécommunication à postes supplémentaires (PBX1) avec l'installation de télécommunication à postes supplémentaires (PBX2),
caractérisée par une première mémoire déterminée d'informations de taxes (MT1.1, MT1.2, ..., MT1.n), associée à des premiers terminaux (T1), une ligne de transmission de données (X.25) qui relie l'installation de télécommunication à postes supplémentaires (PBX2) à l'autre installation de télécommunication à postes supplémentaires (PBX1, PBX2), pour la transmission de l'information de sélection produite par le premier terminal de télécommunication (T1) et servant à l'établissement d'une première liaison de télécommunication avec l'installation de télécommunication à postes supplémentaires (PBX2), et un programme associé à l'unité de commande (CC) et définissant le procédé pour l'établissement d'une liaison par l'intermédiaire du réseau public de télécommunication avec le premier terminal de télécommunication (T1), conformément à l'information de sélection transmise, pour la liaison du premier terminal de télécommunication (T1) avec un autre terminal de télécommunication (T3) et pour la mémorisation d'une information des taxes, qui sont dues pour l'utilisation du réseau public de télécommunication, dans la mémoire d'informations de taxes (MT1), associée au premier terminal de télécommunication (T1), au moyen de l'installation de télécommunication à postes supplémentaires (PBX2).

14. Installation de télécommunication à postes supplémentaires (PBX) comportant une unité de commande (CC) pour la mise en oeuvre d'un procédé pour l'établissement de liaisons de télécommunication par l'intermédiaire d'un réseau public de télécommunication depuis un premier terminal de télécommunication (T1) non associé à l'installation de télécommunication à postes supplémentaires (PBX), à cette installation de télécommunication à postes supplémentaires (PBX), le premier terminal de télécommunication (T1) établissant une première liaison de télécommunication avec l'installation de télécommunication à postes supplémentaires (PBX) et interrompant la première liaison de télécommunication,
caractérisée par une première mémoire d'informations de taxes (MT1.1, MT1.2, ..., MT1.n) associée à des premiers terminaux déterminés (T1), et par une unité de commande (CC) à laquelle est associé un programme définissant le procédé, pour l'établissement, déclenché par la première liaison de télécommunication, d'une seconde liaison de télécommunication avec un second terminal de télécommunication (T2) ainsi que pour l'établissement de la seconde liaison de télécommunication avec le premier terminal de télécommunication (T1=T2) et pour la mémorisation d'une information des taxes, qui sont dues pour l'utilisation du réseau public de télécommunication, de la seconde liaison de télécommunication dans la mémoire d'informations de taxes (MT1), qui est associée au premier terminal de télécommunication (T1), dans la mesure où le premier terminal de télécommunication (T1) est un terminal externe de télécommunication, qui peut être relié, par l'intermédiaire du réseau public de télécommunication, à l'installation de télécommunication à postes supplémentaires (PBX).

15. Installation de télécommunication à postes supplémentaires suivant la revendication 13 ou 14, caractérisée par un module de circuit (SM), qui peut être relié à l'unité de commande (CC) de l'installation de télécommunication à postes supplémentaires (PBX, PBX2) non associée au premier terminal de télécommunication (T1), et qui comporte une unité de commande (CPU), à laquelle est associée au moins une partie du programme définissant le procédé, et par le fait que le module de circuit (SM), contient les mémoires d'informations de taxes (MT1.1, MT1.2, ... MT1.n).
